# EUROPEAN PATENT APPLICATION

(11) **EP 4 485 141 A1**
(43) Date of publication of application: **01.01.2025**
(21) Application number: 23181433.6
(22) Date of filing: 26.06.2023
(51) Int. Cl.: G06F 3/01, G06F 3/03, G06F 3/0346, G06F 9/445, G08C 17/00, H04N 21/422

(54) **METHOD, COMPUTER PROGRAM, PROCESSING DEVICE, AND USER DEVICE CONTROLLER FOR CONTROLLING A USER DEVICE**

(71) Applicant: Fraunhofer-Gesellschaft zur Förderung der angewandten Forschung e.V., 80686 München (DE)
(72) Inventor: ROHRER, Janis, 79104 Freiburg (DE); SCHAEFER, Frank, 79104 Freiburg (DE); HORCH, Clemens, 79104 Freiburg (DE)
(74) Representative: 2SPL Patentanwälte PartG mbB

(57) **Abstract**

Examples relate to a method, a computer program, a processing device, and a user device controller for controlling a user device. The method (10) for controlling the user device (26) comprises assigning (12) a first mode from a plurality of modes to a user, detecting (14) a first gesture from a plurality of gestures of the user, affecting (16) a control action at the user device based on the first gesture and based on the first mode, and detecting (18) a second gesture and assigning a second mode from the plurality of modes to the user based on the second gesture. An effect of the first gesture (on the user device) is different in the second mode.

## Description

### Field

Examples relate to a method, a computer program, a processing device, and a user device controller for controlling a user device, more particularly, but not exclusively, to a concept for controlling a user device via mode-based gesture control.

### Background

Some conventional systems use gesture control to operate user devices. For example, a camera is used to detect certain user gestures that are linked with control commands for user devices such as smart home applications, smart TVs, smart phones, etc. Some known gesture control systems claim to offer a user as many possibilities as possible to influence the device to be controlled. In doing so, systems usually take the approach of defining a broad set of gestures recognizable by a technical system and assigning a specific control response to each gesture. Depending on which gesture the user executes numerous different control reactions can be triggered. A number of gestures in the gesture set increases with the number of triggerable control responses.

A drawback of these solutions may be that an overwhelming number of possible gestures leads to user confusion. Difficulties in memorizing the combinations of gesture and control responses may result in long search times for desired gestures. The gesture control system may become impractical and overwhelming.

Furthermore, the accuracy of gesture recognition suffers from a high number of gestures. For example, a technical solution may compare hand movements performed by a user with known movement patterns. If many gestures are defined, differences between them may become minimal. The technical solution for recognizing the gestures may have increasing difficulties in correctly assigning or recognizing movement pattern. In some cases, the technical solution may hardly be able to differentiate between two very similar motion patterns. This inaccuracy of gesture recognition may decrease the reliability of the entire control system.

Rainer Dorau, 2011, Springer Link ISBN: 9783642031007, "Emotionales Interaktionsdesign: Gesten und Mimik interaktiver Systeme", outlines ideas behind controlling electronic devices by gesture, with a particular focus on the intuitive and haptic nature of human facial expressions and gestures.

Fatih Erden A. Enis Çetin, 2012, IEEE, DOI: 10.1109/TCE.2014.7027342, "Hand gesture based remote control system using infrared sensors and a camera", describes a concrete technical solution for recognizing gestures by using an infrared sensor and a camera.

Document DE202015009692U1, "Radarbasierte Gestenerkennung und Datenübertragung", discloses a concrete technical solution for the recognition of gestures by radar.

Document DE102018100335A1, "Verfahren zur 3D-Gestenerkennung", describes a general solution for recognizing three-dimensional gestures starting from a technical gesture scanning device.

The above references deal in general with concrete examples for technical realizations of gesture recognition. The processes and methodologies described there can therefore be used as a technical basis for any gesture control system.

For example,
https://www.kickstarter.com/projects/852538132/snowl-the-mouse-reimagined?lang=de provides a technical solution for recognizing movement patterns by using a data ring, but at the same time also integrates them into a comprehensive gesture control system. This system allows the user to click on a slide of a presentation, move the cursor on a laptop, open a specific app, or initiate many other control reactions by performing certain predefined gestures. Here, each gesture is assigned to one control response. In addition, the user is given the option to add new gestures to customize the system to meet individual needs. However, both aspects contribute to the fact that the size of the gesture set increases considerably and confusion on the part of the user may become more and more frequent. A high number of gestures comes with the tradeoff of reduced accuracy of the recognition, as there is less and less room for differentiation.

Document DE102017209262A1 describes an approach to optimize the reliability of gesture recognition by using machine learning. A system for gesture recognition is specifically trained for the assignment of predefined gestures and thus the uniqueness of the assignment is maximized. However, if the gesture set becomes extensive, confusion about the correct gestures for a particular control command may arise.

Juha Kela, Panu Korpipää, Jani Mäntyjärvi, Sanna Kallio, Giuseppe Savino, Luca Jozzo & Sergio Di Marca Published: 23. August 2005, DOI: 10.1007/s00779-005-0033-8, "Accelerometer-based gesture control for a design environment", discuss gesture recognition methodology. Here, most appropriate gestures are identified for a specific control response, so that the user is able to make an intuitive link between gesture and control response. This approach is intended to reduce confusion by intuitively associating each operation with a gesture.

Christine Kühnel, Tilo Westermann, Fabian Hemmert, Sven Kratz, Alexander Müller, Sebastian Möller, October 2011, Science Direct, DOI: 10.1016/j.ijhcs.2011.04.005, "I'm home: Defining and evaluating a gesture set for smart-home control", discloses a method for optimizing the choice of an appropriate gesture for a given control operation in the smart home domain through an accumulation of scientific methods, thus intensifying the intuitive connection between gesture and control response.

The above-described documents first describe a scientific procedure, which enables selecting exactly those gestures from a fixed set of possible gestures, which a user most likely associates with the corresponding control response. The goal here is to create an intuitive link between gesture and control response. Thus, it is evident that the gesture "turn clockwise" is more likely to be associated with the control response "increase volume" than the gesture "wave."

Jacob Grosek, J. Nathan Kutz, 30. April 2014, DOI: 10.5120/21060-3722, "Selecting a Small Set of Optimal Gestures from an Extensive Lexicon. ", describes an effective way to turn a large set of gestures into a smaller gesture set that is more suitable for a particular application, so that the remaining gestures form an intuitive link with the control response and can be reliably distinguished from each other.

Céspedes-Hernández, David, González-Calleros, Juan Manuel, May 2019, Journal of Intelligent and Fuzzy Systems, DOI: 10.3233/JIFS-179046, "A methodology for gestural interaction relying on user-defined gesture sets following a one-shot learning approach." disclose a technical methodology for identifying an optimal set of gestures, whose gestures are intuitively associated by the user with the appropriate control response. In addition, the user is given the option to customize the gesture set depending on the intended use of the control system. An algorithm from the field of machine learning helps to realize this approach.

Some conventional concepts provide a concrete procedure for selecting the most suitable gestures from a large set of gestures in a purely logical and technical manner. However, such systems require a 1: 1-link between the gesture and the control responses. If it is now possible to extract the gestures with the most intuitive character from a large set of gestures, the user's confusion decreases, but the control variety also suffers at the same time.

Document DE202017104779U1, "Radar-based gesture interface" provides a method for recognizing a gesture performed by the user of a vehicle. This gesture comes from a first set of gestures. After the gesture is recognized, the program checks whether the user performs another gesture from a second different set of gestures. This concept divides certain applications into groups and defines a fixed set of gestures per group. A different set of gestures is used for each group of control responses.

### Summary

Conventional systems may face drawbacks with respect to user confusion and declining reliability due to a large number of gestures, which have to be memorized and distinguished.

There is a demand for an improved concept for gesture control of a user device. This demand is met by the subject-matter of the appended independent claims.

Examples of the present invention are based on the finding that gestures can be reused for different control demands by introducing different control modes. The number of possible control responses can then be less dependent on the size of the gesture set.

Examples may manage to get a grip on both the problem of confusion and the problem of error-prone assignment by reusing gestures, while still maintaining a high degree of control diversity. Having a lower number of gestures may reduce user confusion and increase reliability, at the same time control diversity can be maintained by switching between the modes. It is a further finding that a gesture can be linked with multiple control actions differentiated by the mode. Examples might not presuppose any specific technical solution for the recognition of gestures but may make use of an existing system for detecting gestures and define a system for reusing gestures for each such technical solution. Hence, examples may assume that a technical solution for recognizing gestures already exists and provide a control system that can be applied to this same technical solution, with which the problems addressed above can be circumvented. Examples may provide a universally applicable gesture control system that may guarantee a high degree of control diversity despite a small set of gestures by defining a toggle or mode-switching gesture and reusing gestures.

Examples may reduce the problems described above by limiting a set of gestures to a certain number of gestures, e.g. a set of hand gestures. The data available for control responses are divided into logical groups, so-called modes. Within such a mode, the gestures from the gesture set trigger a clearly defined control response. Some embodiments may introduce a toggle gesture, which does not result in a control response but only in a modification of the control system itself, the user can switch between the available control modes. If the change to another mode has been made, then each gesture from the gesture set is again uniquely assigned to a control response, which can be different from the control response in the other modes. With this approach, the same gestures, which can be made clearly distinguishable from each other, may be used over and over again, so that for each gesture a 1:n-order (n is a positive integer) with different control responses may result. This may keep the size of the gesture set small, prevent user confusion, and increase the reliability of the system while maintaining a high level of control diversity.

Examples provide a method for controlling a user device. The method comprises assigning a first mode from a plurality of modes to a user and detecting a first gesture from a plurality of gestures of the user. The method comprises affecting a control action at the user device based on the first gesture and based on the first mode. The method further comprises detecting a second gesture and assigning a second mode from the plurality of modes to the user based on the second gesture. An effect of the first gesture (e.g. on the user device) is different in the second mode. Thereby, examples enable reusing gestures in different modes and a set of gestures can be kept at a memorizable and distinguishable size.

In further examples the method may comprise affecting another control action at the user device based on the first gesture in the second mode. Hence, embodiments may enable to reuse the same gestures to affect different control actions in different modes.

In another example, the second gesture is detected from another user. Hence, switching modes may include switching users and different users may be associated with different modes. Furthermore, the method may comprise detecting a gesture of the other user in the second mode. Hence, the other user may be enabled to control the user device or another device in the second mode. The method may then comprise affecting a control action at another user device based on the first gesture in the second mode.

The method may further comprise activating the user before assigning the first mode to the user. The activating may comprise detecting a pre-defined activation gesture of the user. Embodiments may use a predefined activation gesture before accepting a control gesture/command from a user. For example, one user may be activated at a time. This may lead to the user being deactivated in the second mode. This may involve detecting a deactivation gesture from an activated user before another user can be activated. The power of control may be switched between users based on activation, deactivation, and/or switching gestures. Thereby, control ambiguities may be avoided if multiple users gesticulate.

The plurality of gestures may comprise a limited set of gestures, which is reused in at least two of the plurality of modes. The reuse of the gestures may keep a total number of gestures limited thereby enabling more significant differences between the gestures, which may result in a higher detection reliability and/or higher robustness in gesture detection. For example, the limited set of gestures is configured to affect different control actions in different modes. The above second gesture may be a predefined mode-switching gesture.

Further examples provide a computer program having a program code for performing any of the methods described herein, when the computer program is executed on a computer, a processor, or a programmable hardware component.

Another example is a processing device for controlling a user device with one or more control units configured to perform one of the methods described herein. For example, the processing device may comprise one or more sensors, which are coupled to the one or more control units and which are configured to detect gestures from the plurality of gestures of the user. Yet another example is a user device controller, which comprises an example of the processing device.

### Brief description of the Figures

Some examples of apparatuses and/or methods will be described in the following by way of example only, and with reference to the accompanying figures, in which
Fig. 1 illustrates a block diagram of an example of a method for controlling a user device;
Fig. 2 shows a block diagram of an example of a processing device and an example of a device controller;
Fig. 3 shows a diagram of a mode switching logic in an example;
Fig. 4 illustrates a sequence of activating and deactivating a user in an example; and
Fig. 5 illustrates a sequence of passing power of control between users in an example.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

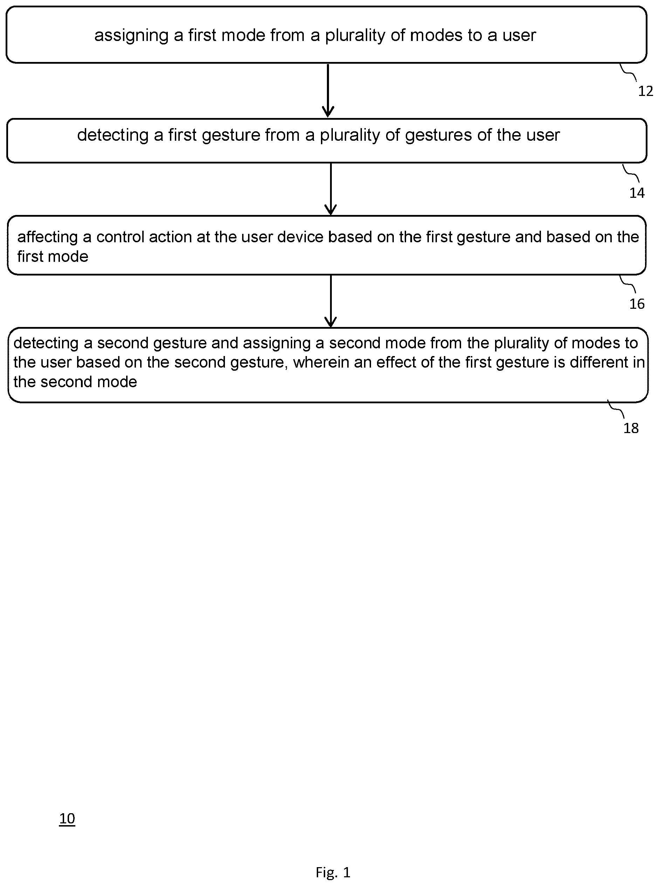

Fig. 1 illustrates a block diagram of an example of a method 10 for controlling a user device. The method comprises assigning 12 a first mode from a plurality of modes to a user and detecting 14 a first gesture from a plurality of gestures of the user. The method 10 further comprises affecting 16 a control action at the user device based on the first gesture and based on the first mode and detecting 18 a second gesture and assigning a second mode from the plurality of modes to the user based on the second gesture. The effect of the first gesture, e.g. on the user device, is different in the second mode.

In examples the user device may be any smart home device, a smart TV, a smartphone, a computer, a vehicle, etc. The respective control actions may be defined accordingly, examples are, switching a light on and off, dimming a light, increasing/decreasing a temperature setting, switching a device on an off, turning a volume up and down, taking or rejecting a call, changing a program or channel, etc.

Basically, the user device can be any device, which is controllable by gestures. The first and second modes may be logical states of a controller or for controlling the user device. In a particular mode certain actions or control actions can be assigned to a specific gesture. In different modes different actions can be assigned to the same gesture. In examples, there may be at least two modes (two or more modes) in the plurality of modes. The detecting 14, 18 of gestures may include capturing data, which can be analyzed or processed for gesture detection.

The capturing of the one or more performed postures or gestures from the user may be implemented in different ways as the following examples will show. For example, the capturing or detecting may use image, video and/or motion capturing. The captured information can then be compared to the predefined postures or gestures and differences between the user's postures/gestures and predefined postures/gestures can be determined. For example, in a static posture/gesture certain geometries can be evaluated, such as angles of limbs, spine, head, relative positions of joints, etc. It is assumed that a gesture may comprise one or more postures or body part positions of the user. A sequence of such body part positions may then form a characteristic for a gesture, e.g. handwaving, hand twists, hand motions, thumb up, thumb down, etc.

For example, in a first mode a clockwise hand rotation may increase a volume of a smart TV and in a second mode the same clockwise hand rotation may increase a brightness. In a third mode the same gesture may zoom in, etc. In another example the second mode may refer to another device, e.g. in the first mode the volume of a smart TV is increased using a predefined gesture, in the second mode the volume of a stereo system is increased using the same predefined gesture, and in a third mode the brightness of a lighting in a living room is increased. The above second gesture may then be a mode-switching gesture and the modes may be dedicated to different devices. The mode switching hence allows reuse of the gestures, e.g. for the same device, for another device, or for another user. The method 10 may further comprising affecting another control action at the user device based on the first gesture in the second mode. Hence control actions assigned to a specific gesture may differ in different modes. The second gesture may be detected from another user, hence modes may switch between different users and the method 10 may accordingly comprise detecting a gesture of another user in the second mode.

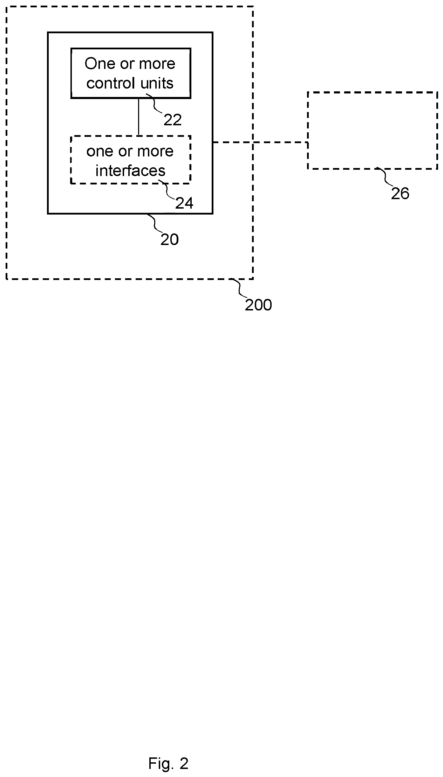

Fig. 2 shows a block diagram of an example of a processing device 20 and an example of a device controller 200. The processing device 20 for controlling a user device 26 comprises one or more control units 22, which are configured to perform one of the methods 10 as described herein. Optional components (from the perspective of the processing device 20) are shown in broken lines.

The one or more control units 22 may be implemented using one or more processing units, one or more circuitries, any means for processing, such as a processor, a computer or a programmable hardware component being operable with accordingly adapted software. In other words, the described function of the one or more control units 22 may as well be implemented in software, which is then executed on one or more programmable hardware components. Such hardware components may comprise a general-purpose processor, a Digital Signal Processor (DSP), a micro-controller, etc. A further example is a user device controller 200, e.g. for an automated device, e.g. an automated system, e.g. for entertainment, gaming, exercising, vehicle, smart home etc., comprising an example of the processing device 20.

As further illustrated in Fig. 2, the processing device 20 may optionally (shown in broken lines) comprise one or more interfaces 24, which are coupled to the respective one or more control units 22. The one or more interfaces 24 may correspond to one or more inputs and/or outputs for receiving and/or transmitting information, which may be in digital (bit) values according to a specified code, within a module, between modules or between modules of different entities. For example, an interface 24 may comprise interface circuitry configured to receive and/or transmit information. In examples an interface 24 may correspond to any means for obtaining, receiving, transmitting or providing analog or digital signals or information, e.g. any connector, contact, pin, register, input port, output port, conductor, lane, etc., which allows providing or obtaining a signal or information. An interface 24 may be configured to communicate (transmit, receive, or both) in a wireless or wireline manner and it may be configured to communicate, i.e. transmit and/or receive signals, information with further internal or external components. The one or more interfaces 24 may comprise further components to enable communication in a (mobile) communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly, adapted radio frequency components, etc.

In further examples, the processing device 20 may comprise one or more sensors, which are coupled to the control unit (e.g. directly or via the one or more interfaces 24) and which are configured to detect gestures from the plurality of gestures of the user. In general, the detecting 14, 18 may comprise capturing and analyzing image or video data of the one or more performed postures of the user. Image processing may then be used to extract details on a user's posture/gesture. For example, motion capturing may be used. The detecting 14, 18 then comprises capturing and analyzing motion data of the one or more performed postures/gestures of the user. Such capturing of motion data may be aided by the use of motion data from one or more motion sensors, which can be static or worn by the user. Such sensors may be image/video sensors, radar or lidar sensors, motion sensors, etc.

Examples may provide a control system that can be adapted to any technical solution suitable for the recognition of gestures. Such a technical solution may enable assignment of, for example, hand movements performed by a user to a gesture from an already defined, but in its size limited gesture set. The control system may then initiate a corresponding control response when a (predefined) gesture is detected.

A gesture recognition system may use a limited total number of recognizable gestures (e.g., clockwise circle, counterclockwise circle, zigzag movement), e.g. limited to a few, easily distinguishable gestures, thus allowing an unambiguous and clear assignment of the gestures performed by the use. A control variety might not suffer from a restriction of the gesture set as the control system is built according to a mode structure. In each mode, the gestures from the gesture set can be used to trigger various control responses. Thus, a gesture "circle clockwise" can be used in a first mode for a first control response and in the second mode, however, the "circle clockwise" gesture results in a second control response, which is different from the first control response. Within a mode, logically linked control reactions can be triggered by the corresponding predefined gestures. However, it also follows from this structure that only very specific control operations can be triggered within a mode. In order to use control operations from a different mode it is necessary to switch to this mode. The plurality of gestures may comprise a limited set of gestures, which is reused in at least two of the plurality of modes. The limited set of gestures may be configured to affect different control actions in different modes.

This change of modes can be achieved in examples by a so-called toggle or mode-switching gesture. The above second gesture, cf. Fig. 1, may be a predefined mode-switching gesture. This may refer to a gesture that is not part of the predefined gesture set for control actions, but can also be recognized clearly and unambiguously (e.g. waving the hand). When the control system recognizes this gesture, a change of mode is initiated (e.g. from a first mode to a second mode). Once the change has been made and the user executes a gesture defined in the gesture set, a different control operation is triggered than before in the first mode. Depending on the number of control operations available, and how they can be combined in logical groups, the number of modes can be varied as desired. In this way, it is possible to increase the number of control reactions that can be triggered by gestures, but to keep the set of gestures small and thus ensure unambiguous recognition and prevent user confusion.

In addition, examples may enable control of one and the same device as a team. For this purpose, the set of gestures described above can be supplemented by a so-called forwarding gesture, which may or might not be different from the previously introduced toggle or mode-switching gesture. For example, in normal operation, user A controls a device by his hand movements and user B has no influence on it. If user B now executes the described passing/toggle/mode-switching gesture, he gets the complete control power over the system. From this point on, only the hand movements of user B are relevant for the control reactions of the device. User A no longer has any influence on the behavior. In some examples user A might have to deactivate first (by an according gesture) to prevent users from stealing control from each other. Again, the number of users who can theoretically gain control power can be increased at will. It should be noted, however, that at least in some examples only one user is actually and actively controlling the device at any given time.

The different modes may hence also be used to assign control to different users and/or different user devices, respectively. In other words, in some examples the different modes may switch between different sets of control actions assigned to the gestures, different users and/or different user devices. The method 10 may hence further comprise affecting a control action at another user device based on the first gesture in the second mode. Moreover, the method 10 may comprise activating the user before assigning the first mode to the user. The activating may comprise detecting a pre-defined activation gesture of the user. Furthermore, the user may be deactivated in the second mode.

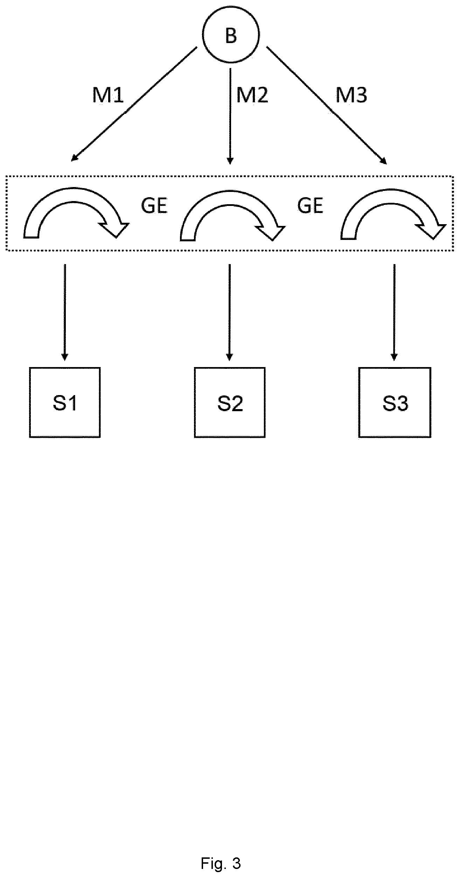

The idea of using a mode structure and the resulting possibility for gesture reusability is illustrated in Fig. 3 by means of a schematic diagram. Fig. 3 shows a diagram of a mode switching logic in an example. If the user B is in mode M1, he can execute a "half-circle-clockwise"-gesture GE and activate the control response S 1. If, on the other hand, the user is in mode M2, he triggers with the same gesture GE the control reaction S2. And if the user is in mode M3 the control response S3 results from the same gesture GE ("half-circle-clockwise"-gesture also indicated by the arrows in Fig. 3). The example illustrated in Fig. 3 shows different control actions S1, S2, and S3 assigned to the same gesture GE in different modes M1, M2, and M3.

In addition, examples may offer a solution for controlling a device in a team. A user can gain control power by using a clearly defined pass-on gesture, which, just like the toggle gesture, only entails a modification of the control system.

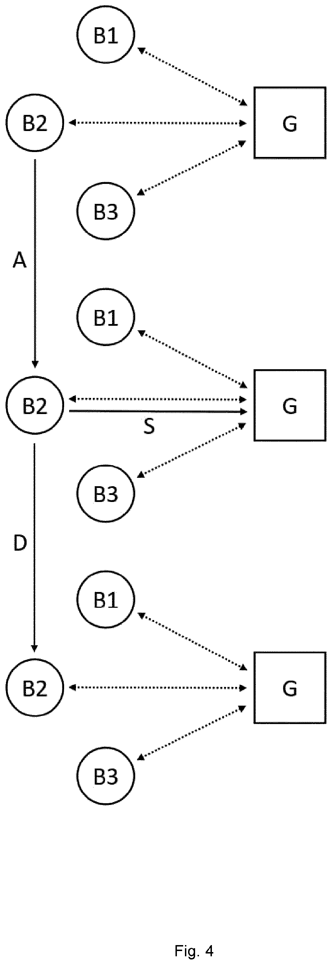

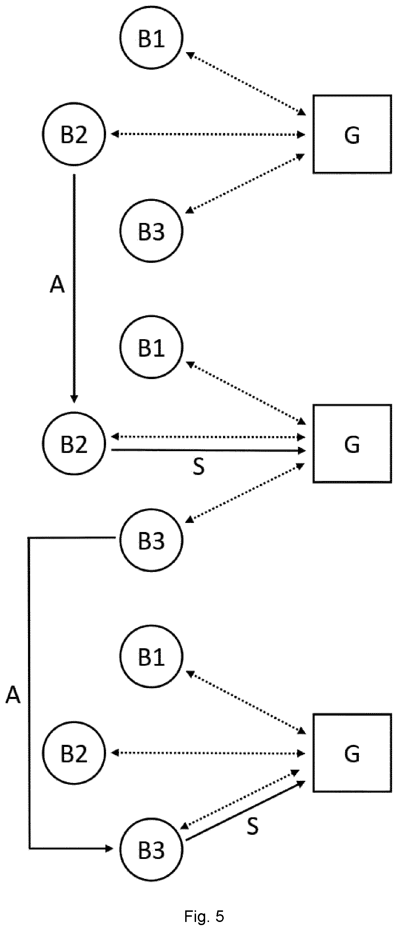

Fig. 4 illustrates a sequence of activating and deactivating a user in an example. Fig. 4 shows how control over one device by several users can be logically implemented in an example. Fig. 5 illustrates a sequence of passing power of control between users in an example. Fig. 4 shows an initial state at the top, in which the three users B1, B2 and B3 are passively connected to a device G, which is to be controlled. "Passively connected" can be interpreted in this context as being registered as potential controller but not being activated (indicated by broken lines in Fig. 4).

In the initial state shown at the top of Fig. 4 an activation A of user B2 is done by executing a pass-on gesture (activation gesture), which results in the subsequent state shown in the middle of Fig. 4. After activation of user B2 the control power S over the device G is assigned to user B, who can control the device G (indicated by the solid line arrow) with his gestures within the mode structure control (cf. Fig. 3). By deactivation D of user B2, which is again activated by executing an according deactivation-gesture D, the whole system returns to the initial state shown at the bottom of Fig. 4. The activation and deactivation gestures A and D may be the same or different gestures. In Fig. 5 the initial situation with the three users B1, B2, and B3, who are passively connected to the device G is shown at the top. User B2 obtains control power S through an activation gesture A, which takes the system to the state shown in the middle of Fig. 5. In the further course, however, there is now no deactivation of user B2 but an activation A of user B3, who executes a pass-on gesture (which can be the same as the activation gesture). This activation of user B3 automatically triggers deactivation of user B2 and a transfer of the control power S to B3 as indicated at the bottom of Fig. 5.

Examples may provide the advantage that a control method or unit can manage to keep a set of gestures small and thus prevent confusion in control, as well as to enable unambiguous recognition of gestures without sacrificing control diversity. The universal applicability as well as the possibility to control one and the same device as a team are also central characteristics of the project.

Example method or processing devices may allow devices to be controlled remotely using hand and/or other gestures. Examples of such devices are touch displays on cell phones, gesture control systems in cars, or the use of gestures in video games. In the future, such systems may become increasingly important not only in the field of autonomous driving or in dealing with the smart home, but also in the field of virtual reality (VR) as well as in everyday life.

Examples may be applied quasi-universally to any existing or future gesture control system. Wherever comparable control responses can be grouped into discrete groups, and these in turn can be conceived of as modes, examples may help preventing confusion by reducing the necessary set of gestures and increasing the reliability of the system without undermining control diversity. Furthermore, the system can be used, whenever the transfer of control power between different persons results in facilitating the handling of a device to be controlled.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for controlling a user device (26), the method (10) comprising
assigning (12) a first mode from a plurality of modes to a user;
detecting (14) a first gesture from a plurality of gestures of the user;
affecting (16) a control action at the user device based on the first gesture and based on the first mode; and
detecting (18) a second gesture and assigning a second mode from the plurality of modes to the user based on the second gesture, wherein an effect of the first gesture (on the user device) is different in the second mode.

2. The method (10) of claim 1, further comprising affecting another control action at the user device (26) based on the first gesture in the second mode.

3. The method (10) of claim 1, wherein the second gesture is detected from another user.

4. The method (10) of claim 3, further comprising detecting a gesture of the other user in the second mode.

5. The method (10) of claim 1, further comprising affecting a control action at another user device based on the first gesture in the second mode.

6. The method (10) of one of the claims 1 to 5, further comprising activating the user before assigning the first mode to the user, wherein the activating comprises detecting a predefined activation gesture of the user.

7. The method (10) of one of the claims 1 to 6, wherein the user is deactivated in the second mode.

8. The method (10) of one of the claims 1 to 7, wherein the plurality of gestures comprises a limited set of gestures, which is reused in at least two of the plurality of modes.

9. The method (10) of claim 8, wherein the limited set of gestures is configured to affect different control actions in different modes.

10. The method (10) of one of the claims 1 to 9, wherein the second gesture is a predefined mode switching gesture.

11. A computer program having a program code for performing a method (10) according to any one of claims 1 to 10, when the computer program is executed on a computer, a processor, or a programmable hardware component.

12. A processing device (20) for controlling a user device with one or more control units (22) configured to perform one of the methods (10) of claims 1 to 10.

13. The processing device (20) of claim 12, further comprising one or more sensors, which are coupled to the control unit (22) and which are configured to detect gestures from the plurality of gestures of the user.

14. A user device controller (200) comprising the processing device (20) of one of the claims 12 or 13.
